(19) Europäisches Patentamt
European Patent Office
Office européen des brevets

(11) EP 1 479 745 A2

(12) # EUROPÄISCHE PATENTANMELDUNG

(43) Veröffentlichungstag:
**24.11.2004 Patentblatt 2004/48**

(51) Int Cl.[7]: **C09J 133/08**

(21) Anmeldenummer: **04010514.0**

(22) Anmeldetag: **04.05.2004**

(84) Benannte Vertragsstaaten:
**AT BE BG CH CY CZ DE DK EE ES FI FR GB GR HU IE IT LI LU MC NL PL PT RO SE SI SK TR**
Benannte Erstreckungsstaaten:
**AL HR LT LV MK**

(30) Priorität: **21.05.2003 DE 10322900**

(71) Anmelder: **tesa AG**
**20253 Hamburg (DE)**

(72) Erfinder:
- **Husemann, Marc, Dr.**
**22605 Hamburg (DE)**
- **Zöllner, Stephan, Dr.**
**22043 Hamburg (DE)**

(54) **Verfahren zur Herstellung UV-transparenter Haftklebemassen**

(57) Die Erfindung betrifft ein Verfahren zur Herstellung einer UV-transparenten Haftklebemasse, die ein mittleres Molekulargewicht $M_w$ von weniger als 300.000 g/mol und eine UV-Transparenz bei 300 nm von mehr als 95 % aufweist. Erfindungsgemäß sind dabei folgende Schritte vorgesehen:

(a) Polymerisieren einer Monomerzusammensetzung, umfassend

(a1) 75 bis 99,8 Gew.-% Acrylsäureester und/oder Methacrylsäureester der Formel $CH_2=CH(R_1)(COOR_2)$, wobei $R_1$ H oder $CH_3$ darstellt und $R_2$ eine Alkylkette mit 1 bis 20 C-Atomen darstellt;

(a2) 0 bis 10 Gew.-% Acrylsäure und/oder Methacrylsäure der Formel $CH_2=CH(R_1)(COOH)$, wobei $R_1$ H oder $CH_3$ darstellt;

(a3) 0,2 bis 5 Gew.-% olefinisch ungesättigte Monomere, die zumindest eine UVvernetzende funktionelle Gruppe pro Monomer aufweisen; und

(a4) 0 bis 20 Gew.-% olefinisch ungesättigte Monomere, die zumindest eine funktionelle Gruppe pro Monomer aufweisen;

um eine Copolymerzusammensetzung zu erhalten, sowie

(b) Zumischen von 2 bis 20 Gew.-%, bezogen auf die Copolymerzusammensetzung, eines Silikatfüllstoffes vor oder nach der Polymerisation der Monomerzusammensetzung in Schritt (a), wobei der Silikatfüllstoff einen maximalen Teilchendurchmesser von 50 nm aufweist.

EP 1 479 745 A2

## Beschreibung

Die Erfindung betrifft ein Verfahren zur Herstellung UV-transparenter Haftklebemassen.

Haftklebemassen werden in vielen Fällen für langzeitige Verklebungen auch in einem relativ großen Temperaturbereich eingesetzt. Für diese Anwendungen werden sehr bevorzugt Acrylathaftklebemassen eingesetzt. Neben der sehr guten Temperaturstabilität besitzen diese Acrylathaftklebemassen auch noch weitere Vorteile, wie z. B. eine sehr geringe Alterung sowie Witterung unter UV-Licht und sauerstoffhaltiger Atmosphäre.

Ein weiterer sehr wichtiger Aspekt ist die optische Transparenz der Haftklebemassen. Gerade für eine Vielzahl von industriellen Anwendungen im Elektrik- und Elektronikbereich werden Acrylathaftklebemassen gefordert, die sogar unter einer Wellenlänge von 400 nm immer noch eine hohe Transparenz besitzen.

Ein weiterer Trend besteht in der Verwendung von Haftklebebändern mit sehr geringen Lösemittelanteilen. Hier bietet sich die sogenannte Hotmelt-Technologie an, wo Polyacrylathaftklebemassen vom Lösemittel befreit und anschließend aus der Schmelze beschichtet werden. Die Beschichtung verläuft relativ problemlos für Acrylatschmelzhaftkleber mit geringem mittlerem Molekulargewicht, wie es die kommerziellen Acrylatschmelzhaftkleber UV acResins™ der BASF AG beweisen. Für eine Vielzahl von industriellen Anwendungen wird aber eine hohe Scherfestigkeit (hohe innere Kohäsion) gefordert, die diese Schmelzhaftkleber aber nicht erfüllen können.

Der Erfindung liegt daher die Aufgabe zugrunde, ein Verfahren zur Herstellung einer UV-transparenten Haftklebemasse anzugeben, die aus der Schmelze verarbeitet werden kann, UV-vernetzbar ist, eine hohe UV-Transparenz aufweist, einen geringen Restlösemittelanteil besitzt und eine hohe innere Kohäsion nach der UV-Vernetzung aufweist.

Diese Aufgabe wird durch die Merkmale des Anspruchs 1 gelöst. Zweckmäßige Ausgestaltungen der Erfindungen ergeben sich aus den Merkmalen der Ansprüche 2 bis 9.

Nach Maßgabe der Erfindung ist ein Verfahren zur Herstellung einer UV-transparenten Haftklebemasse, die ein mittleres Molekulargewicht $M_w$ von weniger als 300.000 g/mol und eine UV-Transparenz bei 300 nm von mehr als 95 % aufweist, vorgesehen, das die folgenden Schritte umfaßt:

(a) Polymerisieren einer Monomerzusammensetzung, umfassend

(a1) 75 bis 99,8 Gew.-% Acrylsäureester und/oder Methacrylsäureester der Formel $CH_2=CH(R_1)(COOR_2)$, wobei $R_1$ H oder $CH_3$ darstellt und $R_2$ eine Alkylkette mit 1 bis 20 C-Atomen darstellt;

(a2) 0 bis 10 Gew.-% Acrylsäure und/oder Methacrylsäure der Formel $CH_2=CH(R_1)(COOH)$, wobei $R_1$ H oder $CH_3$ darstellt;

(a3) 0,2 bis 5 Gew.-% olefinisch ungesättigte Monomere, die zumindest eine UV-vernetzende funktionelle Gruppe pro Monomer aufweisen; und

(a4) 0 bis 20 Gew.-% olefinisch ungesättigte Monomere, die zumindest eine funktionelle Gruppe pro Monomer aufweisen;

um eine Copolymerzusammensetzung zu erhalten, sowie

(b) Zumischen von 2 bis 20 Gew.-%, bezogen auf die Copolymerzusammensetzung, eines Silikatfüllstoffes vor oder nach der Polymerisation der Monomerzusammensetzung in Schritt (a), wobei der Silikatfüllstoff einen maximalen Teilchendurchmesser von 50 nm aufweist.

Die Herstellung der Copolymerzusammensetzung erfolgt vorteilhaft durch konventionelle radikalische Polymerisation. Für die radikalisch verlaufenden Polymerisationen werden bevorzugt Initiatorsysteme eingesetzt, die zusätzlich weitere radikalische Initiatoren zur Polymerisation enthalten, insbesondere thermisch zerfallende radikalbildende Azo- oder Peroxo-Initiatoren. Prinzipiell eignen sich jedoch alle für Acrylate dem Fachmann geläufigen, üblichen Initiatoren. Die Produktion von C-zentrierten Radikalen ist im Houben Weyl, Methoden der Organischen Chemie, Vol. E 19a, S. 60 - 147 beschrieben. Diese Methoden werden in bevorzugter Weise in Analogie angewendet.
Beispiele für Radikalquellen sind Peroxide, Hydroperoxide und Azoverbindungen. Als einige nicht ausschließliche Beispiele für typische Radikalinitiatoren seien hier genannt Kaliumperoxodisulfat, Dibenzoylperoxid, Cumolhydroperoxid, Cyclohexanonperoxid, Di-t-butylperoxid, Azodiisosäurebutyronitril, Cyclohexylsulfonylacetylperoxid, Diisopropylpercarbonat, t-Butylperoktoat, Benzpinacol. In einer sehr bevorzugten Auslegung wird als radikalischer Initiator 1,1'-Azobis-(cyclohexancarbonsäurenitril) (Vazo 88™ der Fa. DuPont) oder Azodisobutyronitril (AIBN) verwendet.

Die nanopartikelförmigen Füllstoffe können den Monomeren vor der Polymerisation und/oder nach Beendigung der Polymerisation beigemischt werden.

Die mittleren Molekulargewichte $M_w$ der bei der radikalischen Polymerisation entstehenden Haftklebemassen werden sehr bevorzugt derart gewählt, daß sie in einem Bereich von 300.000 g/mol liegen; speziell für die weitere Verwendung als Schmelzhaftkleber werden Polymere mit mittleren Molekulargewichten $M_w$ von 150.000 bis 275.000 g/mol hergestellt. Die Bestimmung des mittleren Molekulargewichtes erfolgt über Größenausschlußchromatographie (GPC) oder Matrix-unterstützte Laser-Desorption/Ionisations-Massenspektrometrie (MALDI-MS).

Die Polymerisation kann in Substanz, in Gegenwart eines oder mehrerer organischer Lösungsmittel, in Gegenwart von Wasser oder in Gemischen aus organischen Lösungsmitteln und Wasser durchgeführt werden. Es wird dabei angestrebt, die verwendete Lösungsmittelmenge so gering wie möglich zu halten. Geeignete organische Lösungsmittel sind reine Alkane (z. B. Hexan, Heptan, Octan, Isooctan), aromatische Kohlenwasserstoffe (z. B. Benzol, Toluol, Xylol), Ester (z. B. Essigsäureethylester, Essigsäurepropyl-, -butyl- oder -hexylester), halogenierte Kohlenwasserstoffe (z. B. Chlorbenzol), Alkanole (z. B. Methanol, Ethanol, Ethylenglycol, Ethylenglycolmonomethylether) und Ether (z. B. Diethylether, Dibutylether) oder Gemische davon. Die wäßrigen Polymerisationsreaktionen können mit einem mit Wasser mischbaren oder hydrophilen Colösungsmittel versetzt werden, um zu gewährleisten, daß das Reaktionsgemisch während des Monomerumsatzes in Form einer homogenen Phase vorliegt. Vorteilhaft verwendbare Colösungsmittel für die vorliegende Erfindung werden aus der folgenden Gruppe gewählt, die aus aliphatischen Alkoholen, Glycolen, Ethern, Glycolethern, Pyrrolidinen, N-Alkylpyrrolidinonen, N-Alkylpyrrolidonen, Polyethylenglycolen, Polypropylenglycolen, Amiden, Carbonsäuren und Salzen davon, Estern, Organosulfiden, Sulfoxiden, Sulfonen, Alkoholderivaten, Hydroxyetherderivaten, Aminoalkoholen, Ketonen und dergleichen, sowie Derivaten und Gemischen davon besteht.

Die Polymerisationszeit beträgt - je nach Umsatz und Temperatur - zwischen 2 und 72 Stunden. Je höher die Reaktionstemperatur gewählt werden kann, das heißt, je höher die thermische Stabilität des Reaktionsgemisches ist, desto geringer kann die Reaktionsdauer gewählt werden.

Zur Initiierung der Polymerisation ist für die thermisch zerfallenden Initiatoren der Eintrag von Wärme essentiell. Die Polymerisation kann für die thermisch zerfallenden Initiatoren durch Erwärmen auf 50 bis 160 °C, je nach Initiatortyp, initiiert werden.

Für das erfindungsgemäße Verfahren kann es auch von Vorteil sein, die Haftklebemassen in Substanz zu polymerisieren. Hierzu kann insbesondere die Präpolymerisationstechnik eingesetzt werden. Die Polymerisation wird mit UV-Licht initiiert, aber nur zu einem geringen Umsatz von ca. 10 bis 30 % geführt. Anschließend kann dieser Polymersirup z. B. in Folien eingeschweißt werden (im einfachsten Fall Eiswürfel) und dann in Wasser zu hohem Umsatz durchpolymerisiert werden. Diese Pellets lassen sich dann als Acrylatschmelzkleber einsetzen, wobei für den Aufschmelzvorgang besonders bevorzugt Folienmaterialien eingesetzt werden, die mit dem Polyacrylat kompatibel sind. Auch für diese Präparationsmethode lassen sich die thermisch-leitfähigen Materialzusätze vor oder nach der Polymerisation zusetzen.

Ein anderes vorteilhaftes Herstellungsverfahren für die Comonomerzusammensetzung ist die anionische Polymerisation. Hier werden als Reaktionsmedium bevorzugt inerte Lösungsmittel verwendet, wie z. B. aliphatische und cycloaliphatische Kohlenwasserstoffe, oder auch aromatische Kohlenwasserstoffe.

Das lebende Polymer wird in diesem Fall im allgemeinen durch die Struktur $P_L(A)$-Me repräsentiert, wobei Me ein Metall der Gruppe I, wie z. B. Lithium, Natrium oder Kalium, und $P_L(A)$ ein wachsendes Polymer aus den Acrylatmonomeren ist. Die Molmasse des herzustellenden Polymers wird durch das Verhältnis von Initiatorkonzentration zu Monomerkonzentration kontrolliert. Als geeignete Polymerisationsinitiatoren eignen sich z. B. n-Propyllithium, n-Butyllithium, sec-Butyllithium, 2-Naphthyl-lithium, Cyclohexyllithium oder Octyllithium, wobei diese Aufzählung nicht den Anspruch auf Vollständigkeit besitzt. Ferner sind Initiatoren auf Basis von Samarium-Komplexen zur Polymerisation von Acrylaten bekannt (Macromolecules, 1995, 28, 7886) und hier einsetzbar.

Weiterhin lassen sich auch difunktionelle Initiatoren einsetzen, wie beispielsweise 1,1,4,4-Tetraphenyl-1,4-dilithiobutan oder 1,1,4,4-Tetraphenyl-1,4-dilithioisobutan. Coinitiatoren lassen sich ebenfalls einsetzen. Geeignete Coinitiatoren sind unter anderem Lithiumhalogenide, Alkalimetallalkoxide oder Alkylaluminium-Verbindungen. In einer sehr bevorzugten Ausführungsform sind die Liganden und Coinitiatoren so gewählt, daß Acrylatmonomere, wie z. B. n-Butylacrylat und 2-Ethylhexylacrylat, direkt polymerisiert werden können und nicht im Polymer durch eine Umesterung mit dem entsprechenden Alkohol generiert werden müssen.

Zur Herstellung von Comonomerzusammensetzungen mit einer engen Molekulargewichtsverteilung eignen sich auch kontrollierte radikalische Polymerisationsmethoden.

Zur Herstellung von Haftklebebändern können die Haftklebemassen aus Lösung oder sehr bevorzugt als Hotmelt-Systeme (also aus der Schmelze) beschichtet werden. Für das erfindungsgemäße Verfahren kann es daher erforderlich sein, das Lösemittel von der Haftklebemasse zu entfernen. Hier können im Prinzip alle dem Fachmann bekannten Verfahren eingesetzt werden. Ein sehr bevorzugtes Verfahren ist die Aufkonzentration über einen Ein- oder Doppelschneckenextruder. Der Doppelschneckenextruder kann gleich- oder gegenläufig betrieben werden. Das Lösemittel oder Wasser wird bevorzugt über mehrere Vakuumstufen abdestilliert. Zudem wird je nach Destillationstemperatur des Lösemittels gegengeheizt. Die Restlösemittelanteile betragen bevorzugt < 1 %, stärker bevorzugt < 0,5 %

und am stärksten bevorzugt < 0,2 %.

Für die Beschichtung aus der Schmelze als Hotmelt-System wird in einer bevorzugten Auslegung das Füllmaterial zu der Schmelze kompoundiert. Hierbei ist eine homogene Einarbeitung unbedingt erforderlich. Homogene Verteilungen des Füllmaterials in der Haftklebemasse werden bevorzugt durch Kompoundierung in Doppelschneckenextrudern oder Planetwalzenextrudern erreicht. Die Doppelschneckenextruder können gleich- oder gegenläufig betrieben werden. Zur Vermeidung der Polymerschädigung wird der Extruder mit einer spezifischen Antriebsenergie von weniger als 0,05 KWh/kg sehr bevorzugt mit einer spezifischen Antriebsenergie von weniger als 0,03 KWh/kg betrieben, wobei eine Temperatur der Klebmasse im Austritt des Extruders von nicht mehr als 125° C erhalten wird.

Vorteil dieser Verfahrensweise ist die nur sehr kurzfristig Kontaminierung des Herstellprozesses mit dem Füllmaterial sowie die Vermeidung von Lösemitteln.

Nach der Kompoundierung wird bevorzugt der Hotmelt über eine Schmelzdüse oder über eine Extrusionsdüse oder über ein Walzenauftragswerk auf ein Trägermaterial beschichtet.

Zur UV-Vernetzung wird mittels kurzwelliger ultravioletter Bestrahlung in einem Wellenlängenbereich von 200 bis 400 nm, je nach verwendetem UV-Photoinitiator, bestrahlt, insbesondere unter Verwendung von Quecksilber-Hochdruck- oder - Mitteldruck-Lampen bei einer Leistung von 80 bis 240 W/cm. Die Bestrahlungsintensität wird der jeweiligen Quantenausbeute des UV-Photoinitiators und dem einzustellenden Vernetzungsgrad angepaßt.

Optional kann in einer Ausführungsform nach Möglichkeit zusätzlich mit Elektronenstrahlen vernetzt werden. Typische Bestrahlungsvorrichtungen, die zum Einsatz kommen können, sind Linearkathodensysteme, Scannersysteme bzw. Segmentkathodensysteme, sofern es sich um Elektronenstrahlbeschleuniger handelt. Eine ausführliche Beschreibung des Standes der Technik und die wichtigsten Verfahrensparameter findet man bei Skelhorne, Electron Beam Processing, in Chemistry and Technology of UV and EB formulation for Coatings, Inks and Paints, Vol. 1, 1991, SITA, London. Die typischen Beschleunigungsspannungen liegen im Bereich zwischen 50 kV und 500 kV, vorzugsweise zwischen 80 kV und 300 kV. Die angewandten Streudosen bewegen sich zwischen 5 bis 150 kGy, insbesondere zwischen 20 und 100 kGy.

Es können auch beide Vernetzungsverfahren angewendet werden oder andere Verfahren, die hochenergetische Bestrahlung ermöglichen.

In sehr bevorzugten Ausführungsformen werden Transfer-Tapes, doppelseitige oder einseitige Haftklebebänder hergestellt. Als Trägermaterial für Transfer-Tapes eignen sich z. B. alle silikonisierten oder fluorierten Folien mit einer Releasewirkung. Als Folienmaterialien generell eignen sich beispielsweise BOPP, MOPP, PET, PVC, PUR, PE, PE/EVA, EPDM, PP und PE. Weiterhin lassen sich für Transfer-Tapes auch Trennpapiere (Glassine Papiere, Kraft Papiere, polyolefinisch beschichtete Papiere) einsetzen.

Die erfindungsgemäß hergestellte Haftklebemasse ist eine UV-transparente und UV-vernetzende Acrylathaftklebemasse. Das mittlere Molekularwicht $M_w$ wird dabei gemäß Test A, der Restlösungsmittelanteil gemäß Test B bestimmt. Beide Tests werden im Zusammenhang mit den Beispielen näher erläutert.

Eine bevorzugte Haftklebemasse umfaßt eine Copolymerzusammensetzung mit 86 bis 90 Gew.-% der Komponente (a1). Eine weitere bevorzuge Haftklebemasse umfaßt eine Copolymerzusammensetzung mit 4 bis 6 Gew.-% der Komponente (a2). Eine andere bevorzugte bevorzuge Haftklebemasse umfaßt eine Copolymerzusammensetzung mit 0,5 bis 1,5 Gew.-% der Komponente (a3).

Demnach wird eine Haftklebemasse besonders bevorzugt, die eine Copolymerzusammensetzung mit 86 bis 90 Gew.-% der Komponente (a1), 4 bis 6 Gew.-% der Komponente (a2), 0,5 bis 1,5 Gew.-% der Komponente (a3) und 0 bis 20 Gew.-% der Komponente (a4) umfaßt.

Der Restlösungsmittelanteil liegt vorzugsweise unter 0,5 %, bezogen auf die Haftklebemasse.

Die Haftklebemasse umfaßt vorzugsweise 5 bis 10 Gew.-% des Silikatfüllstoffs, bezogen auf die Copolymerzusammensetzung. In einer bevorzugten Ausführungsform der Erfindung weisen die Silicatfüllstoffe oder weitere Füllstoffpartikel eine Größe von maximal 10 bis 30 nm auf.

Neben konventionellem und kommerziell erhältlichem Kieselgel, wie z. B. Degussa Aerosil 200™, können auch synthetisch geschichtete Silicate, wie z. B. SOMASIF™ ME 100 der Fa. CO-OP Ltd., Japan, als Silicatfüllstoff eingesetzt werden. Ebenso können nanosphärische Kieselgele eingesetzt werden, die beispielsweise nach Vorschriften von Philipse [Journal Colloid Interface Science 1989, 128, 121-136] oder Buining [Journal Colloid Interface Science 1996, 179, 318-321] hergestellt werden können. Nanosphärische Kieselgele sind aber auch von DuPont kommerziell unter den Markennamen Ludox® und Synton™ mit Partikelgrößen von 5 bis 40 nm erhältlich. Die Partikelgröße des Kieselgels sollte maximal 50 nm betragen, wobei der gewünschte Bereich dann beispielsweise durch Mahlen mit einer Kugelmühle eingestellt werden sollte.

Die Monomere werden bevorzugt dermaßen gewählt, daß die resultierenden Polymere bei Raumtemperatur als Haftklebemassen eingesetzt werden können, insbesondere derart, daß die resultierenden Polymere haftklebende Eigenschaften entsprechend dem "Handbook of Pressure Sensitive Adhesive Technology" von Donatas Satas (van Nostrand, New York 1989) und eine möglichst geringe UV-Absorption im UV-Lichtbereich unterhalb 400 nm besitzen. Es wird daher z. B. für a1), a2) und a4) auf Monomere verzichtet, die Aromaten enthalten.

Zur Erzielung einer für Haftklebemassen bevorzugten Glasübergangstemperatur $T_G$ der Polymere von $T_G$ 25 °C werden entsprechend dem vorstehend gesagten die Monomere sehr bevorzugt derart ausgesucht und die mengenmäßige Zusammensetzung der Monomermischung vorteilhaft derart gewählt, daß sich nach der Fox-Gleichung (I) (vgl. T.G. Fox, Bull. Am. Phys. Soc. 1 (1956) 123) der gewünschte $T_G$-Wert für das Polymer ergibt.

$$\frac{1}{T_G} = \sum_n \frac{w_n}{T_{G,n}} \qquad (I$$

Hierin repräsentiert n die Laufzahl über die eingesetzten Monomere, $w_n$ den Massenanteil des jeweiligen Monomers n (Gew.-%) und $T_{G,n}$ die jeweilige Glasübergangstemperatur des Homopolymers aus den jeweiligen Monomeren n in K.

In einer sehr bevorzugten Weise werden für a1) Acryl- oder Methacrylmononere eingesetzt, die aus Acryl- und Methacrylsäureestern mit Alkylgruppen aus 4 bis 14 C-Atomen, bevorzugt 4 bis 9 C-Atomen, bestehen. Spezifische Beispiele, ohne sich durch diese Aufzählung einschränken zu wollen, sind Methylacrylat, Methylmethacrylat, Ethylacrylat, n-Butylacrylat, n-Butylmethacrylat, n-Pentylacrylat, n-Hexylacrylat, n-Heptylacrylat, n-Octylacrylat, n-Octylmethacrylat, n-Nonylacrylat, Laurylacrylat, Stearylacrylat, Behenylacrylat und deren verzweigte Isomere wie z. B. Isobutylacrylat, 2-Ethylhexylacrylat, 2-Ethylhexylmethacrylat, Isooctylacrylat und Isooctylmethacrylat. Weitere einzusetzende Verbindungsklassen für a1) sind monofunktionelle Acrylate bzw. Methacrylate von überbrückten Cycloalkylalkoholen, bestehend aus mindestens 6 C-Atomen. Die Cycloalkylalkohole können auch substituiert sein, z. B. durch $C_{1-6}$-Alkylgruppen, Halogenatome oder Cyanogruppen. Spezifische Beispiele sind Cyclohexylmethacrylate, Isobornylacrylat, Isobornylmethacrylate und 3,5-Dimethyladamantylacrylat.

In einer Ausführungsform werden für a4) Monomere eingesetzt, die polare Gruppen wie Carboxylreste, Sulfon- und Phosphonsäure, Hydroxyreste, Lactam und Lacton, N-substituiertes Amid, N-substituiertes Amin, Carbamat-, Epoxy-, Thiol-, Alkoxy-, Cyanreste, Ether oder ähnliches tragen.
Moderate basische Monomere für a4) sind z. B. N,N-dialkyl-substituierte Amide, wie z. B. N,N-Dimethylacrylamid, N, N-Dimethylmethacrylamid, N-tert.-Butylacrylamid, N-Vinylpyrrolidon, N-Vinyllactam, Dimethylaminoethylmethacrylat, Dimethylaminoethylacrylat, Diethylaminoethylmethacrylat, Diethylaminoethylacrylat, N-Methylolmethacrylamid, N-(Buthoxymethyl)methacrylamid, N-Methylolacrylamid, N-(Ethoxymethyl)acrylamid, N-Isopropylacrylamid, wobei diese Aufzählung nicht abschließend ist. Weitere bevorzugte Beispiele für a4) sind Hydroxyethylacrylat, Hydroxypropylacrylat, Hydroxyethylmethacrylat, Hydroxypropylmethacrylat, Allylalkohol, Maleinsäureanhydrid, Itaconsäureanhydrid, Itaconsäure, Glyceridylmethacrylat, Phenoxyethylacrlylat, Phenoxyethylmethacrylat, 2-Butoxyethylmethacrylat, 2-Butoxyethylacrylat, Cyanoethylmethacrylat, Cyanoethylacrylat, Glycerylmethacrylat, 6-Hydroxyhexylmethacrylat, Vinylessigsäure, Tetrahydrofurfurylacrylat, β-Acryloyloxypropionsäure, Trichloracrylsäure, Fumarsäure, Crotonsäure, Aconitsäure, Dimethylacrylsäure, wobei diese Aufzählung nicht abschließend ist.
In einer weiteren sehr bevorzugten Vorgehensweise werden als Monomere a4) Vinylester, Vinylether, Vinylhalogenide, Vinylidenhalogenide, Vinylverbindungen mit aromatischen Cyclen und Heterocyclen in α-Stellung eingesetzt. Auch hier seien nicht ausschließlich einige Beispiele genannt: Vinylacetat, Vinylformamid, Vinylpyridin, Ethylvinylether, Vinylchlorid, Vinylidenchlorid und Acrylonitril.

Weiterhin werden in einer weiteren Ausführungsform für a3) Photoinitiatoren mit einer copolymerisierbaren Doppelbindung eingesetzt. Als Photoinitiatoren sind Norrish-I- und -II-Photoinitiatoren geeignet. Beispiele sind Benzoinacrylat und ein acryliertes Benzophenon der Fa. UCB (Ebecryl P 36® ). Im Prinzip können alle dem Fachmann bekannten Photoinitiatoren copolymerisiert werden, die das Polymer über einen Radikalmechanismus unter UV-Bestrahlung vernetzen können. Ein Überblick über mögliche einsetzbare Photoinitiatoren die mit einer Doppelbindung funktionalisiert werden können, wird in Fouassier: "Photoinititation, Photopolymerization and Photocuring: Fundamentals and Applications", Hanser-Verlag, München 1995, gegeben. Ergänzend wird auf Carroy et al. in "Chemistry and Technology of UV and EB Formulation for Coatings, Inks and Paints", Oldring (Hrsg.), 1994, SITA, London, verwiesen.

in einer Ausführungsform können den Haftklebemassen Harze beigemischt sein. Als zuzusetzende klebrigmachende Harze können nur Harze eingesetzt werden, die im UV-Bereich von 300 bis 400 nm eine äußerst geringe Absorption aufweisen.
Auch hier werden wiederum Harze bevorzugt, die keinen oder einen nur sehr geringen aromatischen Anteil oder konjugierte Doppelbindungen aufweisen.

Eine Übersicht über alle mit Polyacrylaten kompatiblen Harze wird im "Handbook of Pressure Sensitive Adhesive Technology" von Donatas Satas (van Nostrand, 1989) gegeben.

Weiterhin können optional Weichmacher (Plastifizierungsmittel), Keimbildner, Blähmittel, Compoundierungsmittel und/oder Alterungsschutzmittel, z. B. in Form von primären und sekundären Antioxidantien oder in Form von

Lichtschutzmitteln, zugesetzt sein.

Zusätzlich können Vernetzer und Promotoren zur Vernetzung beigemischt werden. Geeignete Vernetzer für die Elektronenstrahlvernetzung und UV-Vernetzung sind beispielsweise bi- oder multifunktionelle Acrylate, bi- oder multifunktionelle Isocyanate (auch in blockierter Form) oder bi- oder multifunktionelle Epoxide.

Zu einer optionalen Vernetzung mit UV-Licht können den erfindungsgemäß hergestellten Haftklebemassen UV-absorbierende Photoinitiatoren zugesetzt werden. Nützliche Photoinitiatoren, welche sehr gut zu verwenden sind, sind Benzoinether, wie z. B. Benzoinmethylether und Benzoinisopropylether; substituierte Acetophenone, wie z. B. 2,2-Diethoxyacetophenon (erhältlich als Irgacure 651® von Fa. Ciba Geigy® ), 2,2-Dimethoxy-2-phenyl-1-phenylethanon und Dimethoxyhydroxyacetophenon; substituierte α-Ketole, wie z. B. 2-Methoxy-2-hydroxypropiophenon; aromatische Sulfonylchloride, wie z. B. 2-Naphthylsulfonylchlorid; und photoaktive Oxime, wie z. B. 1-Phenyl-1,2-propandion-2-(O-ethoxycarbonyl)oxim.

Die oben erwähnten und weitere einsetzbare Photoinititatioren und andere vom Typ Norrish I oder Norrish II können folgenden Reste enthalten: Benzophenon-, Acetophenon-, Benzil-, Benzoin-, Hydroxyalkylphenon-, Phenylcyclohexylketon-, Anthrachinon-, Trimethylbenzoylphosphinoxid-, Methylthiophenylmorpholinketon-, Aminoketon-, Azobenzoin-, Thioxanthon-, Hexarylbisimidazol-, Triazin- oder Fluorenonreste, wobei jeder dieser Reste zusätzlich mit einem oder mehreren Halogenatomen und/oder einer oder mehreren Alkyloxygruppen und/oder einer oder mehreren Aminogruppen oder Hydroxygruppen substituiert sein kann. Ein repräsentativer Überblick wird von Fouassier: "Photoinititation, Photopolymerization and Photocuring: Fundamentals and Applications", Hanser-Verlag, München 1995, gegeben. Ergänzend kann Carroy et al. in "Chemistry and Technology of UV and EB Formulation for Coatings, Inks and Paints", Oldring (Hrsg.), 1994, SITA, London, herangezogen werden.

Beispiele

Die Erfindung wird im folgenden durch Beispiele näher erläutert, ohne sich durch die Wahl der untersuchten Proben unnötig beschränken zu wollen.

Folgende Testmethoden wurden angewendet:

Gelpermeationschromatographie GPC (Test A)

Die Bestimmung des mittleren Molekulargewichtes $M_w$ und der Polydisperisität PD erfolgte über die Gelpermeationschromatographie. Als Eluent wurde THF mit 0,1 Vol.-% Trifluoressigsäure eingesetzt. Die Messung erfolgte bei 25 °C. Als Vorsäule wurde PSS-SDV, 5 μ, $10^3$ Å, ID 8,0 mm x 50 mm verwendet. Zur Auftrennung wurden die Säulen PSS-SDV, 5 μ, $10^3$ sowie $10^5$ und $10^6$ Å mit jeweils ID 8,0 mm x 300 mm eingesetzt. Die Probenkonzentration betrug 4 g/l, die Durchflußmenge 1,0 ml pro Minute. Es wurde gegen PMMA-Standards gemessen.

Restlösemittel (Test B)

Die Bestimmung der Restlösemittelanteile erfolgte gravimetrisch. 2 g der Acrylathaftklebemasse wurden in einer Blechdose gegeben und diese offen bei 120 °C im Trockenschrank gelagert. Anschließend wurde das Gewicht wiederum gemessen. Die Differenz aus ursprünglichen Gewicht des Haftklebers und dem gemessenen Gewicht wird prozentual als Restlösemittelverlust angegeben.

UV-Transmission (Test C)

Die Transmission wurde im Wellenlängenbereich von 190 bis 900 nm mit einem Uvikon 923 der Fa. Biotek Kontron an einem auf 50 μm Polyolefinfolie aufgetragenen 100 μm dicken Probenfilm und gegen eine unbeschichtete Polyolefinfolienreferenz gemessen.

Scherfestigkeit (Test D):

Ein 13 mm breiter Streifen des Klebebandes wurde, nachdem auf Aluminiumfolie umkaschiert wurde, auf eine glatte Stahloberfläche, die dreimal mit Aceton und einmal mit Isopropanol gereinigt wurde, aufgebracht. Die Auftragsfläche betrug 20 x 13 mm (Länge x Breite). Anschließend wurde mit 2 kg Anpreßdruck das Klebeband viermal auf den Stahlträger gedrückt. Bei Raumtemperatur wurde ein 1 kg-Gewicht an dem Klebeband befestigt. Die gemessenen Scherstandzeiten sind in Minuten angegeben und entsprechen dem Mittelwert aus drei Messungen.

180°-Klebkrafttest (Test E):

Ein 20 mm breiter Streifen einer auf Polyester gecoateten Acrylathaftklebemasse wurde auf Stahlplatten aufgebracht. Der Acrylathaftklebestreifen wurde zweimal mit einem 2 kg-Gewicht auf das Substrat aufgedrückt. Das Klebeband wurde anschließend sofort mit 300 mm/min und im 180°-Winkel vom Substrat abgezogen. Die Stahlplatten wurden zweimal mit Aceton und einmal mit Isopropanol gewaschen. Die Meßergebnisse sind in N/cm angegeben und sind gemittelt aus drei Messungen. Alle Messungen wurden bei Raumtemperatur unter klimatisierten Bedingungen durchgeführt.

Im folgenden wird die Herstellung immobilisierter Kieselgel-Partikel beschrieben Diese speziellen Kieselgel-Partikel werden als Referenzmaterial (w) in Referenzbeispiel 3 verwendet.

(a) Herstellung einer azofunktionalisierten Silylverbindung:

Die Herstellung des Allylesters **3** erfolgt, wie im Reaktionsschema (II) dargestellt, nach Prucker und Rühe aus der Carbonsäure **1** über das Zwischenprodukt **2** (Macromolecules 1998, 31, 602-613).

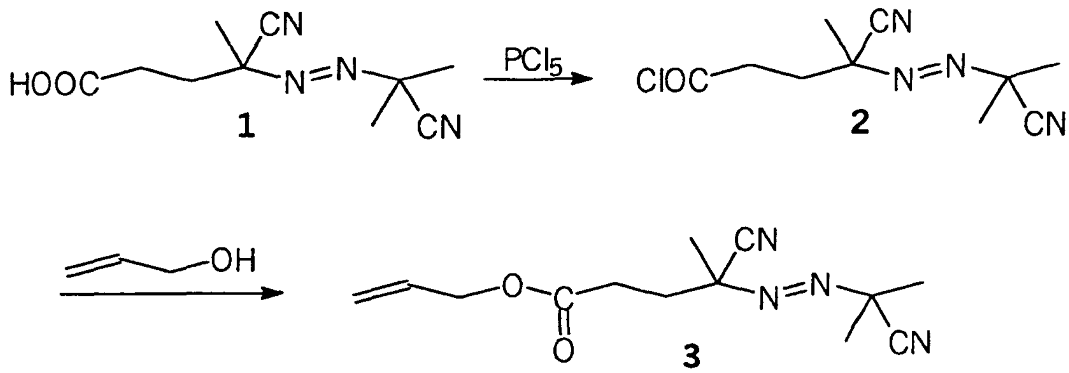


1 2 3

(II)

Spektrum von **3**: 1H-NMR ($CDCl_3$, δ in ppm): 5,8 - 5,9 (m, 1H); 5,2 - 5,4 (m, 2H); 4,6 (d, 2H); 2,3 - 2,5 (m, 4H); 1,69, 1,71, 1,73 (s, 3H jedes Signal).

Die Hydrosilylierung des Allyesters **3** zum Chlorsilan **4** erfolgt, wie im Reaktionsschema (III) dargestellt, nach Husemann und Hawker et al. (Macromolecules 1999, 32, 1424-1431).

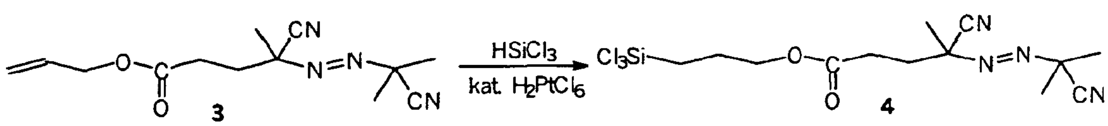


3 4

(III)

(b) Umsetzung des Chlorsilanes **4** zu den immobilisierten Kieselgel-Partikeln (w):

Die Umsetzung der Kieselgel-Partikel erfolgt nach Husemann und Hawker et al. (Macromolecules 1999, 32, 1424-1431).

Referenzbeispiele 1 bis 3 sowie Beispiele 1 bis 4

Die in den Beispielen 1 bis 4 eingesetzten Silikatfüllstoffe wurden von der Fa. DuPont bezogen.

Referenzbeispiel 1

Ein für radikalische Polymerisationen konventioneller 2 L-Glasreaktor wurde mit 18 g Acrylsäure, 40 g n-tert. -Butylacrylamid, 340 g 2-Ethylhexylacrylat und 2 g acryliertem Benzophenon Ebecryl P36® [UCB], 16 g Isopropanol,

133 g Benzin und 133 g Aceton befüllt. Nachdem für 45 Minuten Stickstoffgas unter Rühren durch die Reaktionslösung geleitet worden war, wurde der Reaktor auf 58 °C geheizt und 0,4 g 2,2'-Azobis(2-methylbutyronitril) hinzugegeben. Anschließend wurde das äußere Heizbad auf 75 °C erwärmt und die Reaktion konstant bei dieser Außentemperatur durchgeführt. Nach 4 und 6 h wurde mit jeweils 150 g Aceton/Benzin-Gemisch und 9 g Isopropanol verdünnt. Nach 24 h Reaktionszeit wurde die Polymerisation abgebrochen und auf Raumtemperatur abgekühlt.

Die GPC-Messung (Gelchromatographie, Test A) ergab ein mittleres Molekulargewicht $M_w$ von 280.000 g/mol.

Referenzbeispiel 2

Ein für radikalische Polymerisationen konventioneller 2 L-Glasreaktor wurde mit 14 g Acrylsäure, 160 g n-Butylacrylat, 160 g 2-Ethylhexylacrylat, 64 g Methylacrylat und 2 g Benzoinacrylat, 16 g Isopropanol, 133 g Benzin und 133 g Aceton befüllt. Nachdem für 45 Minuten Stickstoffgas unter Rühren durch die Reaktionslösung geleitet worden war, wurde der Reaktor auf 58 °C geheizt und 0,4 g 2,2'-Azobis(2-methylbutyronitril) hinzugegeben. Anschließend wurde das äußere Heizbad auf 75 °C erwärmt und die Reaktion konstant bei dieser Außentemperatur durchgeführt. Nach 4 und 6 h wurde mit jeweils 150 g Aceton/Benzin-Gemisch und 9 g Isopropanol verdünnt. Nach 22 h Reaktionszeit wurde die Polymerisation abgebrochen und auf Raumtemperatur abgekühlt.

Die GPC-Messung (Test A) ergab ein mittleres Molekulargewicht $M_w$ von 250.000 g/mol.

Referenzbeispiel 3

Das Polymer aus Referenzbeispiel 1 wurde mit 10 Gew.-%, bezogen auf das Gesamtgewicht der Haftklebemasse, immobiliisertem Kieselgel (w) abgemischt, das wie zuvor erläutert erhalten wurde.

Beispiel 1

Das Polymer aus Referenzbeispiel 1 wurde mit 5 Gew.-% Silikatfüllstoffen, bezogen auf das Gesamtgewicht der Haftklebemasse, mit einem Durchmesser von 22 µm abgemischt.

Beispiel 2

Das Polymer aus Referenzbeispiel 1 wurde mit 10 Gew.-% Silikatfüllstoffen, bezogen auf das Gesamtgewicht der Haftklebemasse, mit einem Durchmesser von 22 µm abgemischt.

Beispiel 3

Das Polymer aus Referenzbeispiel 2 wurde mit 5 Gew.-% Silikatfüllstoffen, bezogen auf das Gesamtgewicht der Haftklebemasse, mit einem Durchmesser von 22 µm abgemischt.

Beispiel 4

Das Polymer aus Referenzbeispiel 2 wurde mit 10 Gew.-% Silikatfüllstoffen, bezogen auf das Gesamtgewicht der Haftklebemasse, mit einem Durchmesser von 22 µm abgemischt.

Beschichtung/UV-Vernetzung:

Alle Proben wurden falls nicht anders beschrieben unter Wärme (100°C) bei gleichzeitigem Vakuum (0,1 Torr) vom Lösemittel befreit. Anschließend wurden die gefüllten Haftklebemassen in einem Kneter mit der entsprechenden Menge Füllstoff vermischt und homogenisiert. Die Mischtemperatur betrug 125 °C. Alle Beispiele wurden aus der Schmelze über eine SIG-Düse auf mit einem Masseauftrag von 50 g/m$^2$ auf silikonisiertem Trennpapier und auf eine mit Saran-Primer vorbehandelte 23 µm dicke PET-Folie (der Fa. Mitsubishi) beschichtet.

Zur UV-Härtung wurde eine UV-Anlage der Fa. Eltosch eingesetzt. Die Anlage ist mit einem Hg-dotierten UV-Strahler ausgerüstet, wobei der Wellenlängebereich unterhalb 300 nm ausgeblendet wurde. Die Intensität des Strahlers beträgt 200 W/cm. Die zu vernetzenden Haftklebebandmuster wurden mit 10 m/min durch die Anlage gefahren, wobei zur Erhöhung der Bestrahlungsdosis je Muster in mehreren Durchgängen (6) bestrahlt wurde.

Beispiel 5

Ein für radikalische Polymerisationen konventioneller Reaktor wurde mit 8 kg Acrylsäure, 48 kg NTBAM, 8

kg Maleinsäureanhydrid, 368 kg 2-Ethylhexylacrylat, 368 kg n-Butylacrylat und 600 kg Aceton/Isopropanol (87:13) befüllt. Nach 45 Minuten Durchleiten mit Stickstoffgas unter Rühren wurde der Reaktor auf 58° C hochgeheizt und 400 g Vazo 67™ (Fa. DuPont) hinzugegeben. Anschließend wurde das äußere Heizbad auf 75° C erwärmt und die Reaktion konstant bei dieser Außentemperatur durchgeführt. Nach 1 h Reaktionszeit wurde wiederum 400 g Vazo 67™ (Fa. DuPont) hinzugegeben. Die Reaktion wurde nach 48 h Reaktionszeit abgebrochen und auf Raumtemperatur abgekühlt. Die Klebemasse wurde dann vom Lösungsmittel im Aufkonzentrationsextruder (W&P ZSK 58, L = 40 D) befreit. Das Vakuum der Rückwärtsentgasung betrug 250 mbar, die 3 Vakuumstufen wurden mit 300; 250 und 6 mbar betrieben. Die Eintrittstemperatur der Polymerlösung betrug 110° C. Die Drehzahl wurde auf 185 Umdrehungen pro Minute eingestellt, so dass der Extruder dabei mit einer spezifischen Antriebsenergie von 0,12 kWh/kg betrieben wurde. Der Durchsatz lag bei 110 kg/h Speiselösung entsprechend 51 kg/h Konzentrat. Als Austrittstemperatur wurden 117° C gemessen. Der Acrylathotmelt wurde an einen zweiten Doppelschneckenextruder der Fa. Krupp Werner und Pfleiderer (KWP ZSK 40, L = 36 D) weitergeleitet. Die Eintrittstemperatur des Acrylathotmelts betrug 117° C. Im zweiten Extruder wurde 5 Gew.-% des Silikatfüllstoffes hinzucompoundiert. Der Extruder wurde mit einer Drehzahl von 210 Umdrehungen pro Minute bei einer spezifischen Antriebsenergie von 0,009 kWh/kg betrieben. Der Gesamtdurchsatz lag bei 70 kg/h. Die Austrittstemperatur lag bei 114° C.

Beispiel 6

Ein für radikalische Polymerisationen konventioneller Reaktor wurde mit 8 kg Acrylsäure, 48 kg NTBAM, 40 kg Silikatfüllstoff, 8 kg Maleinsäureanhydrid, 368 kg 2-Ethylhexylacrylat, 368 kg n-Butylacrylat und 600 kg Aceton/ Isopropanol (87:13) befüllt. Nach 45 Minuten Durchleiten mit Stickstoffgas unter Rühren wurde der Reaktor auf 58° C hochgeheizt und 400 g Vazo 67™ (Fa. DuPont) hinzugegeben. Anschließend wurde das äußere Heizbad auf 75° C erwärmt und die Reaktion konstant bei dieser Außentemperatur durchgeführt. Nach 1 h Reaktionszeit wurde wiederum 400 G Vazo 67 ™ (Fa. DuPont) hinzugegeben. Die Reaktion wurde nach 48 h Reaktionszeit abgebrochen und auf Raumtemperatur abgekühlt. Die Klebemasse wurde dann vom Lösungsmittel im Aufkonzentrationsextruder (W&P ZSK 58, L = 40 D) befreit. Das Vakuum der Rückwärtsentgasung betrug 250 mbar, die 3 Vakuumstufen wurden mit 300; 250 und 6 mbar betrieben. Die Eintrittstemperatur der Polymerlösung betrug 110° C. Die Drehzahl wurde auf 185 Umdrehungen pro Minute eingestellt, so dass der Extruder dabei mit einer spezifischen Antriebsenergie von 0,12 kWh/ kg betrieben wurde. Der Durchsatz lag bei 110 kg/h Speiselösung entsprechend 51 kg/h Konzentrat. Als Austrittstemperatur wurden 117° C gemessen.

Nach der Beschichtung und Vernetzung wurden die Testmethoden B bis E durchgeführt.

Ergebnisse

Die Ergebnisse der klebtechnischen Ausprüfungen sowie der physikalischen Eigenschaften sind für die Referenzbeispiele 1 bis 3 und die Beispiele 1 bis in Tabelle 1 zusammengefaßt, aus der die Vorteile der erfindungsgemäß hergestellten Haftklebemassen ersichtlich sind.

Tabelle 1

| | SSZ 10 N RT [min] | UV-Transmission in % | KK-Stahl in [N/cm] | Restlösemittelanteil in % |
|---|---|---|---|---|
| | Test D | Test C | Test E | Test B |
| Referenz-Bsp. 1 | 765 | > 95 | 4,8 | < 1 |
| Referenz-Bsp. 2 | 1040 | > 95 | 4,5 | < 1 |
| Referenz-Bsp. 3 | 15 | 24 | 3,2 | < 1 |
| Beispiel 1 | 7505 | > 95 | 4,0 | < 1 |
| Beispiel 2 | +10000 | > 95 | 4,1 | < 1 |
| Beispiel 3 | 5650 | > 95 | 4,4 | < 1 |
| Beispiel 4 | +10000 | > 95 | 3,7 | < 1 |
| Beispiel 5 | 3805 | > 45 | 4,1 | < 1 |

Tabelle 1 (fortgesetzt)

| | SSZ 10 N RT [min] | UV-Transmission in % | KK-Stahl in [N/cm] | Restlösemittelanteil in % |
|---|---|---|---|---|
| | Test D | Test C | Test E | Test B |
| Beispiel 6 | 4120 | > 15 | 4,2 | < 1 |
| SSZ: Scherstandzeit<br>KK: Klebkraft<br>RT: Raumtemperatur | | | | |

Tabelle 1 ist zu entnehmen, daß durch den Füllstoffzusatz die Kohäsion der Beispiele 1 bis 4 gegenüber den Referenzbeispielen 1 und 2 deutlich ansteigt. Referenzbeispiel 3 hat eine sehr schwache Kohäsion, da durch den Zusatz der immobiliiserten Kieselgele die Transparenz deutlich herabgesetzt wird und somit die Masse nicht mehr effizient UVvernetzt werden kann. Die Restlösemittelanteile liegen sowohl für die Referenzbeispiele als auch für die Beispiele bei < 1 %. Durch die Erhöhung der Kohäsion sinkt die durchschnittliche Klebkraft auf Stahl für die erfindungsgemäßen Beispiele etwas ab. Beispiele 5 und 6 stellen unterschiedliche Verfahren dar. Beispiel 5 wurde in einem Doppelschneckenextruder mit dem Silikatfüllstoff vermischt. Beispiel 6 wurde bereits während der Polymerisation mit dem selben Füllstoff abgemischt. Die Messwerte belegen, dass nahezu keine Unterschiede vorhanden sind.

Mit den erfindungsgemäßen Beispielen 1 bis 4 liegen Hotmeltsysteme vor, die leicht bei 120 °C aus der Schmelze beschichtet werden können, die hochtransparent sind, einen geringen Lösemittelanteil aufweisen und leicht über UV-Licht in einem Wellenlängenbereich von 300 bis 400 nm vernetzt werden können. In diesem Wellenlängenbereich wird die ansonsten auftretende Fragmentierung durch kurze Wellenlängenbereiche (254 nm, UV-C-Strahlung) vermieden. Dies ist ein weiterer Vorteil gegenüber kommerziellen Systemen, wie z. B. den UV acResins™ der BASF AG.

**Patentansprüche**

1. Verfahren zur Herstellung UV-transparenter Haftklebemassen, die ein mittleres Molekulargewicht $M_w$ von weniger als 300.000 g/mol und eine UV-Transparenz bei 300 nm von mehr als 95 % aufweisen, umfassend die Schritte

   (a) Polymerisieren einer Monomerzusammensetzung, umfassend

   (a1) 75 bis 99,8 Gew.-% Acrylsäureester und/oder Methacrylsäureester der Formel $CH_2=CH(R_1)(COOR_2)$, wobei $R_1$ H oder $CH_3$ darstellt und $R_2$ eine Alkylkette mit 1 bis 20 C-Atomen darstellt;

   (a2) 0 bis 10 Gew.-% Acrylsäure und/oder Methacrylsäure der Formel $CH_2=CH(R_1)(COOH)$, wobei $R_1$ H oder $CH_3$ darstellt;

   (a3) 0,2 bis 5 Gew.-% olefinisch ungesättigte Monomere, die zumindest eine UV-vernetzende funktionelle Gruppe pro Monomer aufweisen; und

   (a4) 0 bis 20 Gew.-% olefinisch ungesättigte Monomere, die zumindest eine funktionelle Gruppe pro Monomer aufweisen;

   um eine Copolymerzusammensetzung zu erhalten, sowie

   (b) Zumischen von 2 bis 20 Gew.-%, bezogen auf die Copolymerzusammensetzung, eines Silikatfüllstoffes vor oder nach der Polymerisation der Monomerzusammensetzung in Schritt (a), wobei der Silikatfüllstoff einen maximalen Teilchendurchmesser von 50 nm aufweist.

2. Verfahren nach Anspruch 1, **dadurch gekennzeichnet, daß** der Restlösungsmittelanteil auf weniger als 1 %, bezogen auf die Haftklebemasse, eingestellt wird.

3. Verfahren nach Anspruch 1, **dadurch gekennzeichnet, daß** der Restlösungsmittelanteil auf weniger als 0,2 %, bezogen auf die Haftklebemasse, eingestellt wird.

4. Verfahren nach Anspruch 1, **dadurch gekennzeichnet, daß** die in Schritt (a) erhaltene Copolymerzusammensetzung aufgeschmolzen und anschließend der Silicatfüllstoff zugesetzt und homogen in der Copolymerzusammensetzung verteilt wird.

5. Verfahren nach Anspruch 1, **dadurch gekennzeichnet, daß** die Monomerzusammensetzung in Schritt (a) mittels radikalischer Polymerisation polymerisiert wird.

6. Verfahren nach Anspruch 5, **dadurch gekennzeichnet, daß** die Monomerzusammensetzung auf eine Temperatur zwischen 50 und 160 °C erwärmt wird.

7. Verfahren nach Anspruch 1, **dadurch gekennzeichnet, daß** die Monomerzusammensetzung in Schritt (a) in Substanz polymerisiert wird.

8. Verfahren nach Anspruch 7, **dadurch gekennzeichnet, daß** die Polymerisation mit UV-Licht initiiert werden, 10 bis 30 % der Monomerzusammensetzung polymerisiert werden und das so erhaltene Gemisch in Wasser überführt und vollständig polymerisiert wird.

9. Verfahren nach Anspruch 1, **dadurch gekennzeichnet, daß** die Monomerzusammensetzung in Schritt (a) mittels anionischer Polymerisation polymerisiert wird.